# EUROPÄISCHE PATENTSCHRIFT

(11) **EP 2 183 738 B1**
(45) Veröffentlichungstag und Bekanntmachung des Hinweises auf die Patenterteilung: **09.03.2016**
(21) Anmeldenummer: 07801156.6
(22) Anmeldetag: 12.07.2007
(51) Int. Cl.: B62B 3/14, G09F 21/04, G09F 23/06, B62B 5/06

(54) **DISPLAYELEMENT ZUM ANBRINGEN VON WERBUNG AM GRIFF EINES EINKAUFSWAGENS**
DISPLAY ELEMENT FOR ATTACHING ADVERTISING TO THE HANDLE OF A SHOPPING CART
ÉLÉMENT DE VISUALISATION POUR PLACER DE LA PUBLICITÉ SUR LA POIGNÉE D'UN CHARIOT DE SUPERMARCHÉ

(30) Priorität: 24.04.2007 DE 202007005978 U
(43) Veröffentlichungstag der Anmeldung: 12.05.2010
(73) Patentinhaber: Filosi, Andreas, 82178 Puchheim (DE); Wieth, Franz, 82178 Puchheim (DE)
(72) Erfinder: Sonnendorfer, Horst, verstorben (DE); Wieth, Franz, 82178 Puchheim (DE)
(74) Vertreter: Braun-Dullaeus, Karl-Ulrich
(86) Internationale Anmeldenummer: PCT/DE2007/001260
(87) Internationale Veröffentlichungsnummer: WO 2008/128490

(56) Entgegenhaltungen:
- EP-A- 0 212 557
- EP-A- 1 344 705
- DE-U1- 8 601 412
- US-A- 5 301 443

## Beschreibung

### Technisches Gebiet

Die Erfindung betrifft ein Displayelement zum Anbringen von Werbung am Griff eines Einkaufswagens oder dergleichen, umfassend einen Grundkörper mit einer Ausnehmung zum flächigen Einlegen eines Werbeträgers sowie Befestigungselemente zum Befestigen des Displayelements an der Griffstange oder den Griffstangenhalterungen eines Einkaufswagens.

### Stand der Technik

Ein derartiges Displayelement ist aus der WO 0057543 A1 bekannt.

Das dort beschriebene Displayelement eignet sich universell sehr gut zur nachträglichen Montage auf eine Griffstange eines Einkaufswagens. Das Displayelement hat symmetrisch im Bereich der Längsachse eine kanalartige, einseitig offene Ausnehmung. Die Montage erfolgt einfach und schnell. Nach der Montage des bekannten Displayelementes verläuft die Griffstange gut integriert in dieser einseitig offenen kanalartigen Ausnehmung und es ergibt sich keinerlei Beeinträchtigung im Gebrauch des Einkaufswagens.

Es hat sich gezeigt, dass der Bedarf an immer größeren Werbeflächen entsteht und für solche großen Werbeflächen ist es nicht möglich die Form des bekannten Displayelements lediglich skalar zu vergrößern, weil hierdurch Probleme hinsichtlich der generellen Stabilität auftreten können. und weil ausserdem das skalar vergrößerte Displayelement nicht mehr an jedem Typ von Einkaufswagen montiert werden kann ohne dass es zu Beeinträchtigungen im Gebrauch des Einkaufswagens kommt.

Wenn das bekannte Displayelement skalar vergrößert wird, so steht es beidseitig des Griffrohres entsprechend weit seitlich ab. In einer Standardsituation beim Gebrauch des Einkaufswagens, wenn der Rand des Displayelements gegriffen wird, um den Einkaufswagen zu schieben oder zu ziehen entstehen große Kräfte, die dazu führen können, dass an der mechanisch schwächsten Stelle des Displayelements, eben dort, wo die kanalartige, zum Aufnehmen der Griffstande vorgesehene Ausnehmung verläuft Schäden entstehen.

Die verschiedenen Typen von Einkaufswagen haben unterschiedliche geometrische Verhältnisse hinsichtlich des Abstandes der Griffstange von beweglichen Teilen des Einkaufswagens, etwa der Korbklappe oder dem Kindersitz. Entsprechend ist es nicht mehr möglich an jedem Typ von Einkaufswagen ein skalar vergrößertes Displayelement generell so zu montieren, dass die Griffstange in einer Ausnehmung symmetrisch im Bereich der Längsachse des Displayelementes verlaufen kann.

Aus dem EP 0212 557 A ist eine Schiebegriffvorrichtung mit Displayelement für einen Einkaufswagen bekannt, die aus einen Verbindungsanker und einen ihn umfassenden Hohlkörper aufgebaut ist. Auf den Hohlkörper und den Verbindungsanker werden seitlich den Verbindungsanker vollständig umfassende Haltekappen aufgesteckt.

Das US 5,301,443und das DE 86 01 412 U1 zeigen jeweils ein aus zwei Teilen zusammengesetztes Displayelement, wobei die Teile am Schiebegriff zusammengesetzt und verschraubt werden.

Aus dem EP 1 344 705 A1 ist ein aus zwei Halbschalen bestehendes Griffprofil bekannt, welches sich in der Griffmitte zu einem Displayelement erweitert.

### Offenbarung der Erfindung

### Technische Aufgabe

Es ist Aufgabe der vorliegenden Erfindung ein Displayelement zu schaffen, welches eine große Werbefläche zur Verfügung stellt, ausreichend stabil ist und so ausgebildet ist, dass ein weiter Bereich jeweils neben der Längsachse zur Aufnahme der Griffstange verwendet werden kann und weiterhin schnell und einfach zu montieren ist.

### Technische Lösung

Die Überlegungen, die zu der erfindungsgemäßen Lösung führten machten sich die Erkenntnis zu eigen, dass ein Displayelement, das ein geschlossenes Kastenprofil, welches die Griffstange komplett umgibt im zusammengebauten Zustand eine entsprechende Stabilität aufweist und ein Displayelement leicht und einfach zu Montieren ist, wenn es aus Einzelteilen besteht, die jeweils etwa halbschalenartig die Griffstange umgeben und dann in Formschluss gebracht werden. Nachdem die beiden Halbschalen zusammengefügt wurden bilden sie ein formstabiles kastenartiges Profil, in dessen Innerem die Griffstange verläuft.

Das kastenartige Profil ist dabei im Inneren so gestaltet, dass es die Griffstange eng umschlingt und somit einen guten mechanischen Kontakt zur Griffstange herstellt.

### Vorteilhafte Wirkungen

Durch die erfindungsgemäße Ausgestaltung des neuen Displayelementes ist es möglich Displayelemente mit großer Fläche an einer Vielzahl von Einkaufswagen-Typen zu verwenden.

### Kurze Beschreibung der Zeichnungen

Nachfolgend wird die Erfindung anhand von zwei Zeichnungen näher erläutert.

Es zeigen:
Figur 1 Einzelteile des Displayelements und
Figur 2 das fertig montierte Displayelement an einem Einkaufswagen.

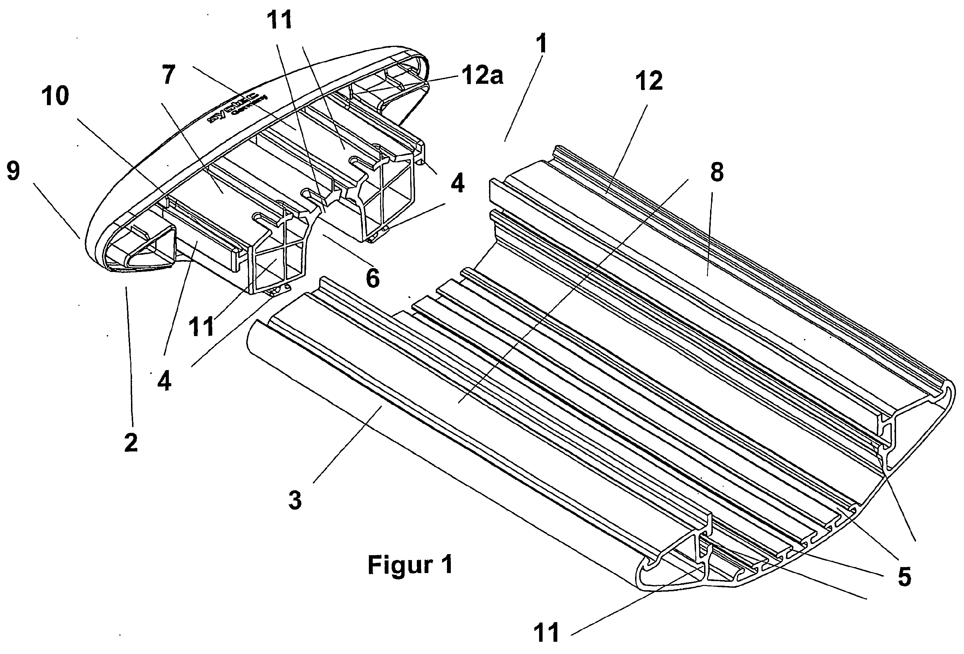

Die Figur 1 zeigt vom Displayelement 1 ein Seitenteil 2 und das Mittelteil 3 in perspektivischer Darstellung. Das Seitenteil 2 und das Mittelteil 3 sowie ein weiteres hier nur durch einen Pfeil mit Bezugszeichen repräsentiertes Seitenteil 2' werden am Griff eines Einkaufswagens ineinander geschoben und ergeben dann eine stabile Einheit.

Die Seitenteile 2 und 2' haben schwalbenschwanzartige Stege 4, die in entsprechende Nuten 5 des Mittelteils einschiebbar sind. Die Stege 4 und die entsprechenden Nuten 5 können auch jedes andere Profil aufweisen, das geeignet ist, eine stabile Verbindung zwischen den Seitenteilen 2,2' und dem Mittelteil 3 herzustellen. Die Seitenteile 2, 2' haben ausserdem eine Ausnehmung 6, die den Griff eines Einkaufswagens aufnehmen kann.

Die Montage des Displayelementes 1 am Griff eines Einkaufswagens erfolgt indem zunächst das Mittelteil 3 von unten an den Griff des Einkaufswagens angesetzt wird. Anschließend wird das Seitenteil 2 von oben auf den Griff des Einkaufswagens angelegt. Der Griff des Einkaufswagens befindet sich nun in der Ausnehmung 6.

Das Mittelteil 3 und das Seitenteil 2 werden nun miteinander verbunden, indem die Stege 4 in die Nuten 5 geschoben werden. Die so hergestellte Einheit aus Seitenteil 2 und Mittelteil 3 hält ohne weiter Hilfsmittel am Griff, was die nun erfolgende Montage des anderen Seitenteils 2' erleichtert.

Das Seitenteil 2' wird von der anderen Seite auf das Mittelteil 3 geschoben. Ebenso wie beim Seitenteil 2 greifen Stege in Nuten, um eine feste Verbindung herzustellen.

Die Ausnehmung 6 im Seitenteil 2 und 2'ist im gezeigten Beispiel genau mittig gewählt. Der Griff des Einkaufswagens verläuft dann beim fertig montierten Displayelement 1 symmetrisch im Bereich der Längsachse durch das Displayelement 1.

Für Anwendungsfälle, in denen es gewünscht ist, dass der Griff des Einkaufswagens nicht mittig durch das Displayelement verläuft ist es vorgesehen, dass die Ausnehmung 6 aussermittig im Seitenteil verläuft. Für unterschiedliche Typen von Einkaufswagen kann es unterschiedliche Seitenteile geben, bei denen die Ausnehmung 6 entsprechend abweichend von der Mitte verläuft. Hierdurch ist es möglich das Displayelement 1 immer angepasst auf den speziellen Typ von Einkaufswagen zu montieren.

Die Griffstange verläuft dann asymmetrisch im Bereich der Längsachse durch das Displayelement 1. Durch die Möglichkeit, die Lage der Ausnehmung im Seitenteil 2 bzw 2' zu variieren kann man das Displayelement so positionieren, dass der Rand nicht mit bewegten Funktionsteilen in Berührung kommen kann und dass für ein Kind, welches im Kindersitz des Einkaufswagens sitzt noch ausreichend Platz verbleibt.

Im zusammen geschobenen Zustand ergibt sich über die Stege/Nut Verbindung ein stabiles Profil aus den Seitenteilen 2 und dem Mittelteil 3. Kräfte, die am Rand 9 des Displayelementes 1 wirken, werden vom kastenförmigen Profil aufgenommen und es wirkt zunächst nur ein kurzer Hebel zwischen Rand 9 und der Seite 10 des kastenförmigen Profils. Zur weiteren Erhöhung der Stabilität sind mehrere Streben 11 im Seitenteil 2 und im Mittelteil 3 vorhanden.

Das kastenförmige Profil wird über eine Verschraubung oder eine Klemmung mit der Griffstange verbunden. Hierdurch wird eine Verdrehsicherung erreicht. Bei einem Griff mit ovalem Querschnitt und einer entsprechend ebenfalls ovalen Ausnehmung 6 ergibt sich die Verdrehsicherung durch einen Formschluss.

Das Seitenteil 2 hat eine obere Fläche 7und das Mittelteil 3 hat zwei obere Flächen 8. Im zusammengefügten Zustand ergeben die Flächen 7 und 8 eine Auflagefläche für ein bedrucktes Material. Das bedruckte Material wird durch eine hier nicht gezeigte, durchsichtige Abdeckung vor Umwelteinflüssen geschützt.

Am Randbereich des Mittelteils ist eine Nut 12 vorgesehen, in welche die durchsichtige Abdeckung eingreift. Ebenso ist es auch möglich, dass das Seitenteil 2 eine Nut 12a aufweist, in welche dann die Abdeckung greift.

Zur Montage der durchsichtigen Abdeckung wird diese zunächst gewölbt und auf die Flächen 8 aufgesetzt. Indem die durchsichtige Abdeckung aufgrund ihrer Elastizität wieder eine plane Form einnimmt, schieben sich die Kanten der durchsichtigen Abdeckung in die Nuten 12 am Rand des Mittelteiles oder alternativ unter die Nuten 12a am Seitenteil. Hierdurch ist die durchsichtige Abdeckung sicher mit dem Displayelement 1 verbunden und fixiert gleichzeitig das bedruckbare Material. Das bedruckbare Material befindet sich nun gegen Entfernen geschützt unter der Abdeckung.

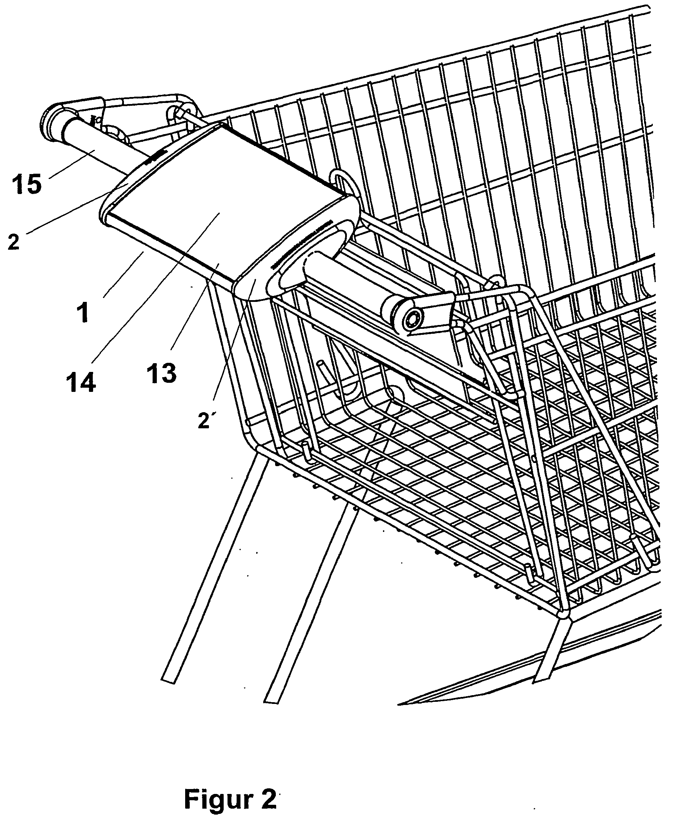

Die Figur 2 zeigt das Displayelement 1 im fertig montierten Zustand am Griff 15 eines Einkaufswagens 16. Die durchsichtige Abdeckung 13, unter der sich die Werbefläche 14 befindet ist im wesentlichen bündig im Displayelement 1 eingesetzt und aufgrund der Tatsache, dass die Abdeckung 13 in die Nuten 12 oder 12a eingreift ist die Abdeckung 13 gut gegen ein mutwilliges Entfernen geschützt.

### Gewerbliche Anwendbarkeit

Die Erfindung ist gewerblich anwendbar im Bereich von Werbung und Information an einem Einkaufswagen, einem Kofferkuli oder einem sonstigen Transportwagen.

## Patentansprüche

1. Displayelement zum Anbringen von Werbung am Griff eines Einkaufswagens oder dergleichen, umfassend einen Grundkörper mit einer Ausnehmung zum flächigen Einlegen eines Werbeträgers sowie Befestigungselemente zum Befestigen des Displayelements an der Griffstange oder den Griffstangenhalterungen eines Einkaufswagens, wobei
das Displayelement (1) aus mehreren Teilen besteht, die im zusammengefügten Zustand die Griffstange (15) oder die Griffstangenhalterung in Form eines geschlossenen Kastenprofiles umgeben
**dadurch gekennzeichnet, dass**
das Displayelement aus einem halbschalenartigen Mittelteil (3) und zwei halbschalenartigen Seitenteilen (2,2') besteht und dass die halbschalenartigen Seitenteile (2, 2') schwalbenschwanzartige Stege (4) aufweisen, die in Nuten (5) des Mittelteils (3) einschiebbar und eingreifbar sind, wobei die Seitenteile (2, 2') eine Ausnehmung aufweisen, die den Griff des Einkaufswagens aufnehmen kann.

2. Displayelement nach einem der vorangegangenen Ansprüche,
**dadurch gekennzeichnet, dass**
im Displayelement (1) eine Ausnehmung (6) zur Aufnahme der Griffstange (15) oder Griffstangenbalterung vorgesehen ist und die Griffstange (15) oder Griffstangenhalterung mit dem Displayelement (1) in Formschluss steht.

3. Displayelement nach einem der vorangegangenen Ansprüche,
**dadurch gekennzeichnet, dass**
die Ausnehmung (6) zur Aufnahme der Griffstange (15) oder Griffstangenhalterung symmetrisch im Bereich der Längsachse des Displayelementes (1) verläuft.

4. Displayelement nach einem der vorangegangenen Ansprüche
**dadurch gekennzeichnet, dass**
die Ausnehmung (6) zur Aufnahme der Griffstange (15) oder Griffstangenhalterung asymmetrisch im Bereich der Längsachse des Displayelementes verläuft.

5. Displayelement nach einem der vorangegangenen Ansprüche
**dadurch gekennzeichnet, dass**
das Displayelement (1) über eine Schraubverbindung verdreh gesichert mit der Griffstange (15) oder Griffstangenhalterung verbunden ist..

## Claims

1. A display element for attaching advertising to the handle of a shopping cart or the like, comprising a base body having a recess for inserting an advertising media in a flat manner as well as comprising fastening elements for fastening the display element to the handlebar or the handlebar brackets of a shopping cart, wherein
the display element (1) consists of a plurality of parts, which, when joined, surround the handlebar (15) or the handlebar bracket in the form of a closed box profile,
**characterized in that**
the display element consists of a half shell-like center part (3) and two half shell-like side parts (2, 2') and that the half shell-like side parts (2, 2') have dove tail-like webs (4), which can be inserted into and which can engage with grooves (5) of the center part (3), wherein the side parts (2, 2') have a recess, which can accommodate the handle of the shopping cart.

2. The display element according to one of the preceding claims, **characterized in that** provision is made in the display element (1) for a recess (6) for accommodating the handlebar (15) or handlebar bracket and the handlebar (15) or handlebar bracket is in form closure with the display element (1).

3. The display element according to one of the preceding claims, **characterized in that** the recess (6) for accommodating the handlebar (15) or handlebar bracket runs symmetrically in the area of the longitudinal axis of the display element (1).

4. The display element according to one of the preceding claims, **characterized in that** the recess (6) for accommodating the handlebar (15) or handlebar bracket runs asymmetrically in the area of the longitudinal axis of the display element.

5. The display element according to one of the preceding claims, **characterized in that** the display element (1) is secured to the handlebar (15) or handlebar bracket via a screw connection so as to be secured against rotation.

## Revendications

1. Elément d'affichage pour apposer de la publicité sur la poignée d'un chariot de supermarché ou similaires, comprenant un corps de base avec un évidement, pour l'insertion à pleine surface d'un support publicitaire, ainsi que des éléments de fixation destinés à fixer l'élément d'affichage sur la barre de poignée ou sur les fixations de la barre de poignée d'un chariot de supermarché, l'élément d'affichage (1) étant constitué de plusieurs parties, qui en position assemblée entourent la barre de poignée (15) ou la fixation de la barre de poignée sous la forme d'un profilé en caisson fermé,
**caractérisé en ce que**
l'élément d'affichage est constitué d'une partie centrale (3) du type d'une demi-coque et de deux parties latérales (2, 2') du type de demi-coques et **en ce que** les parties latérales (2, 2') du type de demi-coques comportent des barrettes (4) en queue d'aronde qui peuvent s'insérer et s'engager dans des rainures (5) de la partie centrale (3), les parties latérales (2, 2') comportant un évidement susceptible de recevoir la poignée du chariot de supermarché.

2. Elément d'affichage selon la revendication précédente, **caractérisé en ce que** pour recevoir la barre de poignée (15) ou la fixation de la barre de poignée, il est prévu dans l'élément d'affichage (1) un évidement (6) et **en ce que** la barre de poignée (15) ou la fixation de la barre de poignée est en engagement par complémentarité de forme avec l'élément d'affichage (1).

3. Elément d'affichage selon l'une quelconque des revendications précédentes, **caractérisé en ce que** pour recevoir la barre de poignée (15) ou la fixation de la barre de poignée, l'évidement (6) s'étend de manière symétrique dans la région de l'axe longitudinal de l'élément d'affichage (1).

4. Elément d'affichage selon l'une quelconque des revendications précédentes, **caractérisé en ce que** pour recevoir la barre de poignée (15) ou la fixation de la barre de poignée, l'évidement (6) s'étend de manière asymétrique dans la région de l'axe longitudinal de l'élément d'affichage (1).

5. Elément d'affichage selon l'une quelconque des revendications précédentes, **caractérisé en ce que** l'élément d'affichage (1) est relié de manière solidaire en rotation avec la barre de poignée (15) ou avec la fixation de la barre de poignée.
